# EUROPEAN PATENT SPECIFICATION

(11) **EP 2 428 532 B1**
(45) Date of publication and mention of the grant of the patent: **25.02.2015**
(21) Application number: 10772220.9
(22) Date of filing: 16.04.2010
(51) Int. Cl.: C08J 9/16, C08J 9/224, C08J 9/22, C08L 25/04, C08J 9/236, C09J 189/00

(54) **EXPANDED POLYSTYRENE PARTICLE HAVING A SKIN LAYER WITH SUPERIOR FORMABILITY, METHOD FOR PRODUCING SAME, AND EXPANDED POLYSTYRENE MOLDED ARTICLE USING SAME**
GEDEHNTES POLYSTYROLPARTIKEL MIT EINER AUSSENSCHICHT VON ERHÖHTER FORMBARKEIT, VERFAHREN ZU SEINER HERSTELLUNG UND GEDEHNTER POLYSTYROLFORMARTIKEL DARAUS
PARTICULE DE POLYSTYRÈNE EXPANSÉ COMPORTANT UNE COUCHE SUPERFICIELLE AYANT UNE FORMABILITÉ SUPÉRIEURE, PROCÉDÉ DE PRODUCTION ASSOCIÉ, ET ARTICLE MOULÉ EN POLYSTYRÈNE EXPANSÉ L'UTILISANT

(30) Priority: 06.05.2009 KR 20090039391
(43) Date of publication of application: 14.03.2012
(73) Proprietor: Polma Co., Ltd., Gyeongsangbukdo 770-130 (KR)
(72) Inventor: PARK, Bong-Kuk, Daegu 706-160 (KR); KIM, Dong-Hyun, Gyeongsan-si Gyeongsangbukdo 712-771 (KR)
(74) Representative: Viering, Jentschura & Partner Patent- und Rechtsanwälte
(86) International application number: PCT/KR2010/002397
(87) International publication number: WO 2010/128760

(56) References cited:
- JP-A- 2004 018 773
- JP-A- 2006 028 374
- JP-A- 2008 120 984
- KR-A- 20050 025 186
- US-A1- 2005 266 244
- US-A1- 2008 224 357
- US-B1- 6 420 034

## Description

### [Technical Field]

The present invention relates to expanded polystyrene. More specifically, the present invention relates to expanded polystyrene particles having a skin layer with superior moldability wherein the skin layer is formed by coating the surface of expanded polystyrene particles with a coating composition containing functional additives such as an inorganic flame retardant, to reduce problems such as deterioration in moldability and quality defects of molded articles which may be generated during steam-heating expansion molding, a method for preparing the same and an expanded polystyrene molded article using the same.

### [Background Art]

Expanded polystyrene molded articles are molded materials having an expanded shape obtained by adding an expanding agent such as pentane or butane to a resin containing a polystyrene homopolymer or a styrene copolymer including a styrene monomer to prepare expandable polystyrene particles, heating the particles using a heat source such as steam to generate foams in the particles and thus expand the same, thereby molding the particles. The expanded polystyrene molded articles are white in color and lightweight, exhibit superior properties such as water resistance, thermal insulation, sound absorption, and buffer capability and are thus widely used in fields such as package and construction materials.

Conventional processes for molding expanded polystyrene in which expandable polystyrene particles are preliminarily expanded and aged once or twice to prepare pre-expanded particles, the pre-expanded particles are injected into a mold and are expansion-molded by steam-heating have no substantial problems associated with the molding in the process of preparing general expanded polystyrene molded articles. However, functional expanded polystyrene molded articles having specific functions have several problems associated with molding. Accordingly, such problems should be solved.

That is, expansion-molded articles used for insulating materials for construction, the major application of expanded polystyrene, cannot exhibit sufficient flame retardancy through addition of a general flame-retardant or non-flammable agent to the resin, due to specific characteristics of the expanded material.

In order to solve this problem, the present inventor suggested a method in which a coating composition comprising a binder component such as a solution-type thermoplastic resin-based adhesive and a great amount of an inorganic flame retardant is applied to the surfaces of pre-expanded polystyrene particles to form skin layers and expansion-molded articles in which the skin layers are fused together are prepared to block spread of flames through flame retardant rib barriers formed by fusion of the skin layers and thereby exert flame retardancy.

This method was reported to be considerably effective in exerting superior functions such as flame retardancy, but disadvantageously caused deterioration in moldability when a great amount of inorganic additive was contained in the resin. That is, in order to exert excellent functionality such as flame retardancy, the coating composition should be prepared by adding an inorganic flame retardant in an amount substantially equivalent to the amount of the resin serving as a binder. The skin layer is leached due to the great amount of inorganic additive and permeation of steam into the skin layer thus cannot be sufficiently exhibited in the steam-heating expansion molding process after the skin layer is formed by applying the coating solution to the surface of pre-expanded resin particles, or the inorganic additive absorbs condensed water produced in a vacuum cooling process during molding, thus disadvantageously causing deterioration in adhesion force between expanded polystyrene particles, and causing slightly serious molding defects such as cracks, inner fusion defects and distortion by contraction to molded materials, which negatively affects production efficiency.

Meanwhile, in a case where, instead of the solution-type thermoplastic resin-based adhesive, other type of adhesive such as emulsion-type thermoplastic resin adhesive is used as the binder, although an inorganic additive which negatively affects moldability is not contained, the adhesive exhibits considerably poor moldability (for example, the resin component of the skin layer is leached) due to moisture in the steam-heating expansion molding process. Such an adhesive is unsuitable for application to molding of expanded polystyrene.

### [Disclosure]

### [Technical Problem]

Therefore, the present invention has been made in view of the problems generated in molding processes such as steam-heating expansion molding, associated with production of molded articles made of expanded polystyrene particles provided with skin layers to provide functionalities, and it is one object of the present invention to provide an expanded polystyrene particles provided on the surface thereof with a skin layer which has an improved shape and exhibits superior moldability, to strength adhesion force of a binder, efficiently remove condensed water produced during cooling of injected steam and thereby reduce defect ratios of molded materials and improve physical properties thereof such as flexural strength or water resistance, a method for preparing the same, and an expanded polystyrene molded article using the same.

### [Technical Solution]

The above and other objects of the related art can be accomplished by the following configurations of the present invention to reinforce adhesion force of the skin layer and thereby improve moldability.

Accordingly, in accordance with one aspect of the present invention, provided is an expanded polystyrene particle having a skin layer with superior moldability, and more specifically, provided is an expanded polystyrene particle provided on the surface thereof with a skin layer wherein the skin layer contains a binder selected from the group consisting of a thermoplastic resin-based adhesive, a thermosetting resin-based adhesive, an inorganic adhesive, a protein-based adhesive and a mixture thereof, wherein the skin layer contains methylene diphenyl diisocyanate (hereinafter, simply referred to as "MDI").

As used herein, methylene diphenyl diisocyanate (MDI) is a substance obtained by treating diphenylmethane diamine, a condensate of aniline and formaldehyde, with phosgene (COCl₂) (phosgenation). This substance exhibits superior adhesion force when reacted with moisture and is then cured. A variety of MDIs such as polymeric MDIs, modified MDIs, monomeric MDIs, or pure MDIs (prepolymers) are prepared taking into consideration storage stability or convenience. Any MDI may be used in the present invention and the form thereof is not particularly limited. Accordingly, a suitable form of MDI may be selected and used taking into consideration factors such as operation conditions, operation environments, stability, efficiency and cost.

Most preferably, methylene diphenyl diisocyanate (MDI) is used in an amount of 0.1 to 30%, based on the weight of expanded polystyrene particles. When the content is lower than 0.1% by weight, improvement effects of moldability are insufficient. When the content is higher than 30% by weight, it is not preferable since a byproduct to decompose polystyrene is produced by hydrothermal decomposition and the expanded polystyrene may be thus melted and contracted, although the steam-heating expansion molding is possible.

Meanwhile, the most preferred form of binder in the present invention is a solution-type thermoplastic resin-based adhesive which has no or almost no effect on expanded polystyrene particles and is least troublesome in steam-heating expansion molding. The thermoplastic resin is preferably a resin having a softening point and a melting point lower than those of the expanded polystyrene taking into consideration conditions of the steam-heating expansion molding process. When a resin having a softening point and a melting point higher than those of the expanded polystyrene is used, fusion property is lowered due to deterioration of expansion force under optimal heating-expansion conditions of the polystyrene, and problems, in which the surface of the resin is molten, the appearance thereof is worsened (deformed) and molding cycles are lengthened, occur out of optimal heating conditions.

In particular, a thermoplastic resin solution obtained by dissolving a vinyl acetate-based resin in a solvent containing one or more selected from water, alcohols, esters, ketones, carboxylic acids, aromatic compounds and halogenated hydrocarbons, such that the concentration of vinyl acetate resin is 3 to 80% by weight, is preferred in view of affinity with the expanded polystyrene particles, harmlessness, workability, moldability.

The skin layer may further contain a variety of functional additives to provide functionalities or improve functions of the coating composition during formation of the skin layer and the functional additive may be suitably selected from a variety of additives such as expanding agents, nucleating agents, lubricants, antioxidants, thermal stabilizers, UV stabilizers, biostabilizers, fillers, reinforcing agents, plasticizers, coloring agents, impact resistance agents, flame retardants, anti-static agents, cross-linking agents, fluorescent whitening agents, thermally conducting agents, electrically conducting agents, permeation controllers, magnetic agents, surfactants, stabilizers, excipients, medicines, solvents, hardeners, moisture absorbents, reinforcing agents, flavoring agents and antimicrobial agents. The additive may be used alone or in combination thereof. The performance of the additive is not limited particularly. The same is also applied to below. The additive may be an organic or inorganic additive.

In a case where a skin layer containing a relatively great amount of inorganic additive is formed in order to impart flame retardancy or flame resistance, the present invention is particularly useful for improving moldability.

The expanded polystyrene particles of the present invention includes all of expanded particles obtained by expanding expandable particles composed of a homopolymer of a styrene monomer, expandable particles composed of a copolymer of a styrene monomer and another monomer which can be copolymerized with the styrene monomer, and expandable particles composed of a polymer which can be blended therewith.

Meanwhile, In accordance with another aspect of the present invention, provided is a method for preparing expanded polystyrene particles having a skin layer with superior moldability comprising: preparing a coating composition containing a binder selected from the group consisting of a thermoplastic resin-based adhesive, a thermosetting resin-based adhesive, an inorganic adhesive, a protein-based adhesive and a mixture thereof; uniformly applying the coating composition to the surface of the expanded polystyrene particles; and drying the coating composition, wherein the skin layer contains methylene diphenyl diisocyanate (MDI).

The MDI may be mixed with the coating composition containing a binder and may be then applied to the surface of expanded polystyrene particles, or may be separately applied thereto after or before application of the coating composition.

Meanwhile, the expanded polystyrene molded article according to the present invention is prepared by expansion-molding the expanded polystyrene particles having a skin layer with superior moldability according to the present invention through steam-heating.

In accordance with another aspect of the present invention, provided is an expanded polystyrene molded article comprising expanded polystyrene particles provided on the surface thereof with skin layers with superior moldability, wherein the skin layers comprise a binder selected from the group consisting of a thermoplastic resin-based adhesive, a thermosetting resin-based adhesive, an inorganic adhesive, a protein-based adhesive and a mixture thereof, wherein the skin layers are fused and thus present in the form of rib barriers between the particles, wherein the skin layers further comprise a cured and modified substance produced by reacting methylene diphenyl diisocyanate with moisture and the binder to reinforce adhesion force between particles.

As mentioned above, MDI reacts with moisture and is cured and modified in the steam-heating expansion molding process, thus exerting adhesion force. The presence of the cured and modified material such as MDI enables great improvement of mechanical properties and shapes of expanded polystyrene molded articles and molding properties such as prevention of cracks.

### [Advantageous Effects]

The present invention provides expanded polystyrene particles having a skin layer on the surface thereof and an expanded polystyrene molded article using the same which can considerably reduce molding defects such as cracks, inner fusion defects, distortion by contraction even a case where the skin layer contains a great amount of inorganic additive to impart functionalities to the resin, thus advantageously improving production efficiency and qualities of functional expanded polystyrene molded article.

In addition, when steam-heating expansion molding is performed using the expanded polystyrene particles, methylene diphenyl diisocyanate (MDI) reacts with moisture and is cured to provide strong adhesion force, unreacted parts of MDI melt the surface of pre-expanded polystyrene particles and roughness is thus formed on the surface, thus advantageously preventing the binder resin from being leached by steam and thus improving qualities such as mechanical properties of completed expansion molded articles.

The use of the expanded polystyrene particles enables preparation of expanded polystyrene molded articles with superior moldability and physical properties in spite of using a coating composition containing a binder (for example, an emulsion-type thermoplastic resin-based adhesive, a thermosetting resin-based adhesive, an inorganic adhesive, a protein-based adhesive, which could not be conventionally molded through a steam-heating expansion molding process due to moldability defects even in a case where a great amount of inorganic functional additive was not added.

### [Description of Drawings]

The above and other objects, features and other advantages of the present invention will be more clearly understood from the following detailed description taken in conjunction with the accompanying drawings, in which:
FIG. 1 is an image showing the appearance of an expanded polystyrene molded article prepared in Comparative Example 1;
FIG. 2 is an image showing the appearance of an expanded polystyrene molded article prepared in Example 1;
FIG. 3 is an image showing the appearance of an expanded polystyrene molded article prepared in Comparative Example 2;
FIG. 4 is an image showing the appearance of an expanded polystyrene molded article prepared in Example 2;
FIG. 5 is an image showing the appearance of an expanded polystyrene molded article prepared in Comparative Example 3;
FIG. 6 is an image showing the appearance of an expanded polystyrene molded article prepared in Example 3;
FIG. 7 an image showing the appearance of an expanded polystyrene molded article prepared in Comparative Example 4;
FIG. 8 is an image showing the appearance of an expanded polystyrene molded article prepared in Example 4;
FIG. 9 is an image showing the cross-sectional view of an expanded polystyrene molded article prepared in Comparative Example 5;
FIG. 10 is an image showing the cross-sectional view of an expanded polystyrene molded article prepared in Example 5;
FIG. 11 is an image showing the appearance of an expanded polystyrene molded article prepared in Comparative Example 6;
FIG. 12 is an image showing the appearance of an expanded polystyrene molded article prepared in Example 6;
FIG. 13 is an image showing the appearance of an expanded polystyrene molded article prepared in Comparative Example 7; and
FIG. 14 is an image showing the appearance of an expanded polystyrene molded article prepared in Example 7.

### [Best Mode]

Hereinafter, the present invention will be described in more detail with reference to the following preferred examples.

### Examples 1 to 7 and Comparative Examples 1 to 7

### (A) Preparation of pre-expanded polystyrene particles

Expanded polystyrene particles obtained by pre-expanding commercially available EPS particles (expandable polystyrene particles available from Shinho Yuhwa Co., Ltd.) in an expanding machine at a temperature of 103 to 105°C, followed by drying and aging in a silo were used for Examples and Comparative Examples. Expansion ratio was 105x on average.

### (B) Formation of skin layer

A skin layer of each of Examples and Comparative Examples was formed by applying a coating composition having a composition set forth in Table 1 below to the expanded polystyrene particles prepared in the process (A), wherein the weight ratio of the expanded polystyrene particles and the coating composition are shown in Table 1, followed by drying. At this time, polymeric MDI (available from BASF Corp.) was used as MDI and mixed with the coating composition. In Example 2, the skin layer was formed by applying a coating composition containing a binder and an inorganic additive to the particles, and adding MDI to the coating composition, followed by applying and drying.

More specifically, 2 Kg of the expanded polystyrene particles were added to a 200L mixer, 2 kg of the prepared coating composition was added thereto while stirring at a rate of 50 rpm, and stirring was maintained for about one minute to uniformly apply the coating compostion to the surface of expanded polystyrene particles. Then, the particles were dried in 60°C hot air until the solvents used for the coating composition were completely volatilized, to obtain expanded polystyrene particles, in which a skin layer composed of the coating composition was formed on the surface thereof.

**[Table 1]**

| No. of Examples | Amount used (wt%) | | | |
|---|---|---|---|---|
| | EPS particles | Coating composition | | MDI |
| | | Binder | Inorganic additive | |
| Comp. Ex. 1 | 40 | Methanolic polyvinyl acetate solution, 30 | Aluminum hydroxide, 30 | - |
| Ex. 1 | 40 | | Aluminum hydroxide, 25 Iron oxide, 1 | 4 |
| Comp. Ex. 2 | 40 | Emulsion type polyvinyl acetate, 30 | Aluminum hydroxide, 29 Iron oxide, 1 | - |
| Ex. 2 | 40 | | Aluminum hydroxide, 25 Iron oxide, 1 | 4 |
| Comp. Ex. 3 | 40 | Acrylic adhesive, 30 | Aluminum hydroxide, 30 | - |
| Ex. 3 | 40 | | Aluminum hydroxide, 25 | 5 |
| Comp. Ex. 4 | 40 | EVA additive, 30 | Aluminum hydroxide, 29 Carbon black, 1 | - |
| Ex. 4 | 40 | | Aluminum hydroxide, 25 Carbon black, 1 | 4 |
| Comp. Ex. 5 | 40 | Silicate inorganic adhesive, 30 | Aluminum hydroxide, 30 Iron oxide, 1 | - |
| Ex. 5 | 40 | | Aluminum hydroxide, 25 Iron oxide, 1 | 4 |
| Comp. Ex. 6 | 40 | Polyvinyl alcohol | Aluminum hydroxide, 30 | - |
| Ex. 6 | 40 | adhesive, 30 | Aluminum hydroxide, 25 Iron oxide, 1 | 4 |
| Comp. Ex. 7 | 40 | Thermosetting resin adhesive, 30 | Aluminum hydroxide, 19 Iron oxide, 1 Calcium hydroxide 10 | - |
| Ex. 7 | 40 | | Aluminum hydroxide, 15 Iron oxide, 1 Calcium hydroxide, 10 | 4 |

### (C) Steam-heating expansion molding

The expanded polystyrene particles having a skin layer prepared in Examples and Comparative Examples were injected into a molding die, seam of a high temperature of 110 to 120°C was added thereto, to elevate an inner temperature of the molding die to 108 to 116°C, to expand an expanding agent contained in the expanded polystyrene particles and thereby produce expansion-molded articles. The density of expansion-molded articles was about 16 kg/m³.

The respective expansion-molded articles were cut using an oscillating cutter and inner fusion state and physical properties thereof were evaluated.

### (D) Tests and Evaluation

The expanded polystyrene particles having a skin layer prepared in Examples and Comparative Examples were evaluated in terms of flexural strength, water resistance, moldability and fusion properties and the results thus obtained are shown in Table 2.

Among the test items, flexural strength was tested using a flexural strength meter in accordance with KS M 3808. Test criteria were based on 15/cm³ noted on an insulating board No. 4, and the flexural strength was represented by "good" provided that the value thereof reached the base level or higher, and was represented by "bad" provided that the value thereof was lower than the base level.

Evaluation of water resistance was carried out by adding a part of samples collected from expansion-molded materials to a constant-temperature water bath set at 50°C, dipping the samples for one hour and measuring strength using a flexural strength meter, and was evaluated based on the same criteria as the flexural strength.

Evaluation of moldability was carried out by observing the state of products after molding through variations in size and observation by the naked eye.

Evaluation of fusion properties was carried out by cutting expansion molded articles and synthetically evaluating evenness of the surface thereof observed by the naked eye and values of flexural strength obtained by measurement. Fusion properties were evaluated based on an area where expanded particles are broken in an inner part thereof, rather than on the outer surface part, with respect to the overall broken surface, when an outer force is applied. In this test, the distance between expanded particles and evenness thereof were observed by the naked eye and products having a value of fusion property of lower than 80% were considered to be "defective".

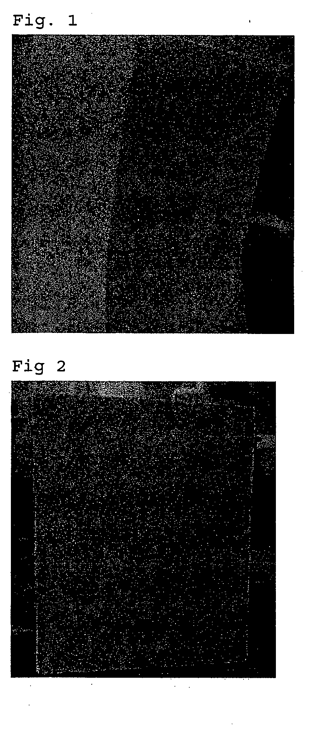

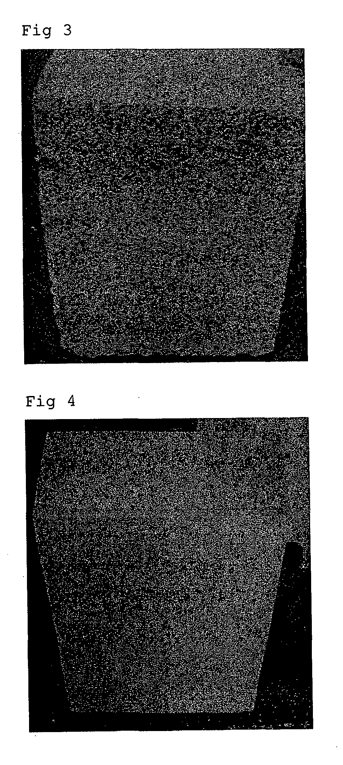

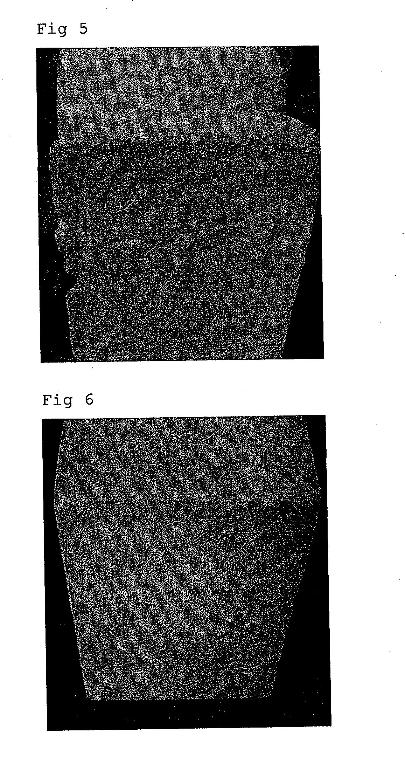

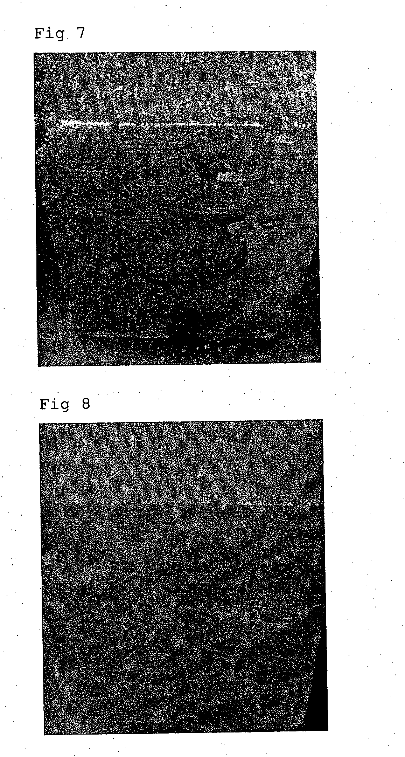

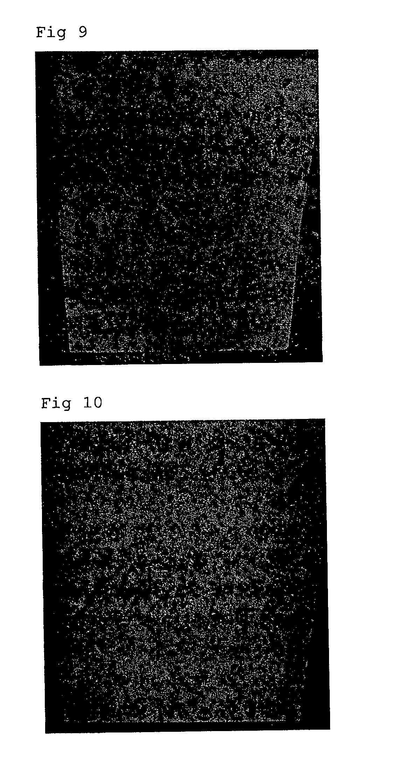

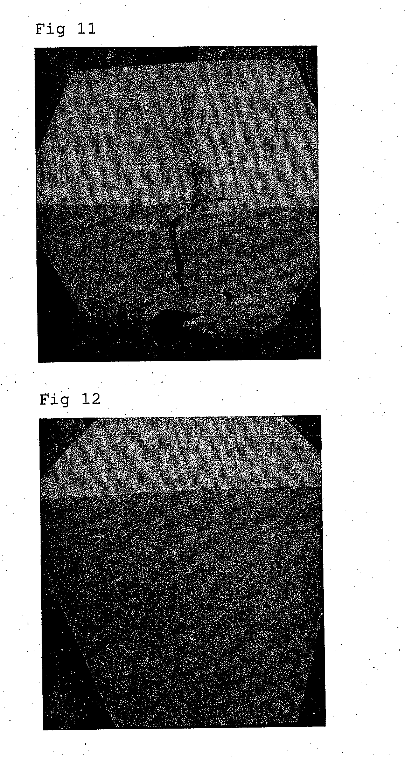

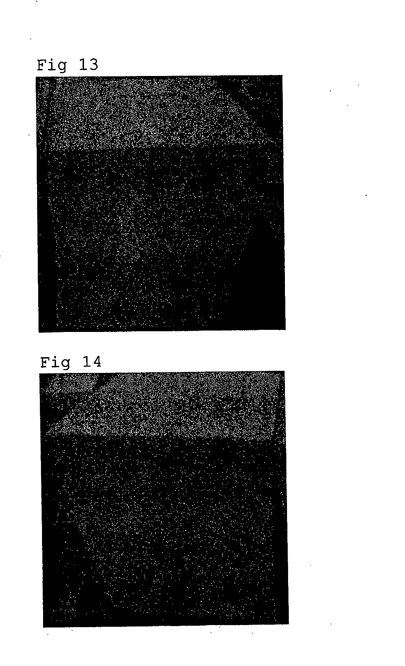

Meanwhile, the shapes of expansion-molded articles prepared in Examples and Comparative Examples were photographed, the images are shown in FIGS. 1 to 13 and evaluation results of the shapes are shown in Table 2.

As can be seen form Table 2 and FIGS. 1 to 14, regardless of the type of binder component, by adding MDI to the skin layer, most molding defect problems generated by moisture in the steam-heating expansion molding process can be reduced and superior results can thus be obtained in view of overall properties including the shape of molded materials, as well as flexural strength, water resistance, moldability and fusion properties thereof.

On the other hand, it can be seen that Comparative Examples using no MDI caused a variety of defect problems including surface contraction to most expansion-molded articles, although there was differences between respective test items depending on the type of binder component.

Accordingly, without great limitation as to the type of binder component, addition of MDI enables great improvement of moldability and physical properties of expanded polystyrene particles provided with a skin layer containing a binder during the steam-heating expansion molding process.

**[Table 2]**

| No. of Examples | Shape of molded material | Flexural strength | Water resistance | Moldability | Fusion properties |
|---|---|---|---|---|---|
| Comp. Ex. 1 | Surface contraction | Excellent | Excellent | Bad | Good |
| Ex. 1 | Good shape stability | Excellent | Excellent | Excellent | Excellent |
| Comp. Ex. 2 | Expansion loss due to steam absorption of surface | Bad | Bad | Bad | Bad |
| Ex. 2 | Good shape stability | Excellent | Excellent | Excellent | Excellent |
| Comp. Ex. 3 | Resin surface is leached during addition of steam and inner fusion state is thus deteriorated | Bad | Bad | Bad | Presence of difference between parts |
| Ex. 3 | Good shape stability | Excellent | Excellent | Excellent | Excellent |
| Comp. Ex. 4 | Partial peel during release of molded material due to condensed water remaining on surface during vacuum cooling | Presence of difference between parts | Bad | Bad | Presence of difference between parts |
| Ex. 4 | Good shape stability | Excellent | Excellent | Excellent | Excellent |
| Comp. Ex. 5 | Good surface appearance and fusion properties, but bad inner fusion properties | Presence of difference between parts | Bad | Bad | Presence of difference between parts |
| Ex. 5 | Good shape stability | Excellent | Excellent | Excellent | Excellent |
| Comp. Ex. 6 | Insufficient flow of steam, secondary expansion by inner latent heat and cracking of molded articles | Presence of difference between parts | Bad | Bad | Presence of difference between parts |
| Ex. 6 | Good shape stability | Excellent | Excellent | Excellent | Excellent |
| Comp. Ex. 7 | Surface contraction | Excellent | Good | Excellent | Excellent |
| Ex. 7 | Good shape stability | Excellent | Good | Excellent | Excellent |

### [Industrial Applicability]

The present invention enables production of expanded polystyrene molded articles which exhibit superior functionalities and excellent qualities, thus causing no problem in view of moldability, appearance and physical properties, when used for producing expanded polystyrene molded articles widely used as construction materials such as insulating materials.

Although the preferred embodiments of the present invention have been disclosed for illustrative purposes, those skilled in the art will appreciate that various modifications, additions and substitutions are possible.

## Claims

1. An expanded polystyrene particle provided on the surface thereof with a skin layer with superior moldability wherein the skin layer comprises a binder selected from the group consisting of a thermoplastic resin-based adhesive, a thermosetting resin-based adhesive, an inorganic adhesive, a protein-based adhesive and a mixture thereof,
wherein the skin layer further comprises methylene diphenyl diisocyanate.

2. The expanded polystyrene particle according to claim 1, wherein the methylene diphenyl diisocyanate is present in an amount of 0.1 to 30% by weight, based on the weight of the expanded polystyrene particle.

3. The expanded polystyrene particle according to claim 1, wherein the binder is a thermoplastic resin-based adhesive comprising a thermoplastic resin having a softening point and a melting point lower than those of expanded polystyrene.

4. The expanded polystyrene particle according to claim 3, wherein the binder is a thermoplastic resin solution prepared by dissolving a vinyl acetate resin in a solvent consisting of one or more selected from water, alcohols, esters, ketones, carboxylic acids, aromatic compounds and halogenated hydrocarbons such that the concentration of the vinyl acetate resin is adjusted to 3 to 80% by weight.

5. The expanded polystyrene particle according to claim 1, wherein the skin layer further comprises a functional additive.

6. The expanded polystyrene particle according to claim 5, wherein the functional additive is selected from the group consisting of expanding agents, nucleating agents, lubricants, antioxidants, thermal stabilizers, UV stabilizers, biostabilizers, fillers, reinforcing agents, plasticizers, coloring agents, impact resistance agents, flame retardants, anti-static agents, cross-linking agents, fluorescent whitening agents, thermally conducting agents, electrically conducting agents, permeation controllers, magnetic agents, surfactants, stabilizers, excipients, medicines, solvents, hardeners, moisture absorbents, reinforcing agents, flavoring agents, antimicrobial agents and mixtures thereof.

7. A method for preparing an expanded polystyrene particle provided on the surface thereof with a skin layer with superior moldability, comprising:
preparing a coating composition containing a binder selected from the group consisting of a thermoplastic resin-based adhesive, a thermosetting resin-based adhesive, an inorganic adhesive, a protein-based adhesive and a mixture thereof;
uniformly applying the coating composition to the surface of expanded polystyrene particles; and
drying the coating composition,
wherein the skin layer comprises methylene diphenyl diisocyanate.

8. The method according to claim 7, (I) wherein the methylene diphenyl diisocyanate is mixed with the coating composition containing a binder and is then applied to the surface of the expanded polystyrene particles, or is separately applied before or after application of the coating composition; or
(II) wherein the methylene diphenyl diisocyanate is used in an amount of 0.1 to 30% by weight, based on the weight of the expanded polystyrene particles.

9. The method according to claim 7, wherein the coating composition further comprises a functional additive.

10. The method according to claim 9, wherein the functional additive is selected from the group consisting of expanding agents, nucleating agents, lubricants, antioxidants, thermal stabilizers, UV stabilizers, biostabilizers, fillers, reinforcing agents, plasticizers, coloring agents, impact resistance agents, flame retardants, anti-static agents, cross-linking agents, fluorescent whitening agents, thermally conducting agents, electrically conducting agents, permeation controllers, magnetic agents, surfactants, stabilizers, excipients, medicines, solvents, hardeners, moisture absorbents, reinforcing agents, flavoring agents, antimicrobial agents and mixtures thereof.

11. The method according to claim 7, wherein the binder is a thermoplastic resin-based adhesive comprising a thermoplastic resin having a softening point and a melting point lower than those of expanded polystyrene.

12. The method according to claim 11, wherein the thermoplastic resin-based adhesive is a solution of a thermoplastic resin in a solvent selected from the group consisting of water, alcohols, esters, ketones, carboxylic acids, aromatic compounds, halogenated hydrocarbons and mixtures thereof.

13. An expanded polystyrene molded article (I) wherein the expanded polystyrene molded article is prepared by expansion molding the expanded polystyrene particle provided with a skin layer according to claim 1 by steam-heating; or
(II) comprising expanded polystyrene particles according to claim 1,
wherein the skin layers are fused and thus present in the form of rib barriers between the particles,
wherein the skin layers further comprise a cured and modified substance produced by reacting methylene diphenyl diisocyanate with moisture and the binder to reinforce adhesion force between particles.

14. The expanded polystyrene molded article comprising expanded particles according to claim 13, wherein each skin layer further comprises a functional additive selected from the group consisting of expanding agents, nucleating agents, lubricants, antioxidants, thermal stabilizers, UV stabilizers, biostabilizers, fillers, reinforcing agents, plasticizers, coloring agents, impact resistance agents, flame retardants, anti-static agents, cross-linking agents, fluorescent whitening agents, thermally conducting agents, electrically conducting agents, permeation controllers, magnetic agents, surfactants, stabilizers, excipients, medicines, solvents, hardeners, moisture absorbents, reinforcing agents, flavoring agents, antimicrobial agents and mixtures thereof.

15. The expanded polystyrene molded article according to claim 14, wherein the functional additive is an inorganic material.

## Patentansprüche

1. Ein aufgeschäumtes Polystyrolteilchen vorgesehen auf der Oberfläche mit einer Randschicht mit ausgezeichneter Formbarkeit, wobei die Randschicht ein Bindemittel umfasst ausgewählt aus der Gruppe bestehend aus einem thermoplastischen Kunstharz-Klebstoff, einem duroplastischen Kunstharz-Klebstoff, einem anorganischen Klebstoff, einem Klebstoff auf Proteinbasis und einer Mischung davon,
wobei die Randschicht ferner Methylen-Diphenyl-Diisocyanat umfasst.

2. Das aufgeschäumte Polystyrolteilchen nach Anspruch 1, wobei Methylen-Diphenyl-Diisocyanat in einer Menge von 0,1 bis 30 Gew.-% basierend auf dem Gewicht des aufgeschäumten Polystyrolteilchens vorhanden ist.

3. Das aufgeschäumte Polystyrolteilchen nach Anspruch 1, wobei das Bindemittel ein thermoplastischer Kunstharz-Klebstoff ist, der ein thermoplastisches Harz mit einem Erweichungspunkt und einem Schmelzpunkt, der niedriger als der des aufgeschäumten Polystyrols ist, umfasst.

4. Das aufgeschäumte Polystyrolteilchen nach Anspruch 3, wobei das Bindemittel eine thermoplastisches Harzlösung ist, die durch Auflösen eines Vinylacetat-Harzes in einem Lösungsmittel bestehend aus zumindest einer oder mehreren Komponenten ausgewählt aus Wasser, Alkoholen, Estern, Ketonen, Carbonsäuren, aromatischen Verbindungen und Halogenkohlenwasserstoffen derart, dass die Konzentration von Vinylacetat-Harz bei 3 bis 80 Gew.% liegt, hergestellt ist.

5. Das aufgeschäumte Polystyrolteilchen nach Anspruch 1, wobei die Randschicht ferner ein Funktionsadditiv umfasst.

6. Das aufgeschäumte Polystyrolteilchen nach Anspruch 5, wobei das Funktionsadditiv ausgewählt ist aus der Gruppe bestehend aus Aufschäumungsstoffen, keimbildenden Wirkstoffen, Schmierstoffen, Antioxidationsmitteln, thermischen Stabilisatoren, UV-Stabilisatoren, Biostabilisatoren, Füllstoffen, Verstärkungsstoffen, Weichmachern, Farbstoffen, Stoßfestigkeitsstoffen, Flammschutzmitteln, Antistatikmitteln, Vernetzungsmitteln, fluoreszierenden Bleichmitteln, thermisch leitfähigen Stoffen, elektrisch leitfähigen Stoffen, Durchströmungsreglern, magnetischen Stoffen, Tensiden, Stabilisatoren, Hilfsstoffen, Medikamenten, Lösungsmitteln, Härtern, Feuchtigkeitsabsorbern, Verstärkungsstoffen, Aromastoffen, antimikrobiellen Stoffen und Mischungen davon.

7. Ein Verfahren zur Herstellung eines aufgeschäumten Polystyrolteilchens vorgesehen auf der Oberfläche mit einer Randschicht mit ausgezeichneter Formbarkeit, umfassend:
Herstellen einer Beschichtungszusammensetzung umfassend ein Bindemittel, das aus der Gruppe bestehend aus einem thermoplastischen Kunstharz-Klebstoff, einem duroplastischen Kunstharz-Klebstoff, einem anorganischen Klebstoff, einem Klebstoff auf Proteinbasis und einer Mischung davon, ausgewählt wird;
gleichförmiges Auftragen der Beschichtungszusammensetzung auf die Oberfläche der aufgeschäumten Polystyrolteilchen; und
Trocknen der Beschichtungszusammensetzung,
wobei die Randschicht Methylen-Diphenyl-Diisocyanat umfasst.

8. Das Verfahren nach Anspruch 7, (I) wobei das Methylen-Diphenyl-Diisozyanat mit der Beschichtungszusammensetzung, die ein Bindemittel enthält, gemischt wird und dann auf die Oberfläche der aufgeschäumten Polystyrolteilchen aufgetragen wird, oder separat vor oder nach dem Auftragen der Beschichtungskomposition aufgetragen wird; oder
(II) wobei das Methylen-Diphenyl-Diisozyanat in einer Menge von 0,1 bis 30 Gew.-% verwendet wird, basierend auf dem Gewicht der aufgeschäumten Polystyrolteilchen.

9. Das Verfahren nach Anspruch 7, wobei die Beschichtungskomposition ferner ein Funktionsadditiv umfasst.

10. Das Verfahren nach Anspruch 9, wobei das Funktionsadditiv ausgewählt wird aus der Gruppe bestehend aus Aufschäumungsstoffen, keimbildenden Wirkstoffen, Schmierstoffen, Antioxidationsmitteln, thermischen Stabilisatoren, UV-Stabilisatoren, Biostabilisatoren, Füllstoffen, Verstärkungsstoffen, Weichmachern, Farbstoffen, Stoßfestigkeitsstoffen, Flammschutzmitteln, Antistatikmitteln, Vernetzungsmitteln, fluoreszierenden Bleichmitteln, thermisch leitfähigen Stoffen, elektrisch leitfähigen Stoffen, Durchströmungsreglern, magnetischen Stoffen, Tensiden, Stabilisatoren, Hilfsstoffen, Medikamenten, Lösungsmitteln, Härtern, Feuchtigkeitsabsorbern, Verstärkungsstoffen, Aromastoffen, antimikrobiellen Stoffen und Mischungen davon.

11. Das Verfahren nach Anspruch 7, wobei das Bindemittel ein thermoplastischer Kunstharz-Klebstoff ist, das ein thermoplastisches Harz mit einem Erweichungspunkt und einem Schmelzpunkt, der niedriger als der des aufgeschäumten Polystyrols ist, umfasst.

12. Das Verfahren nach Anspruch 11, wobei der thermoplastische Kunstharz-Klebstoff eine Lösung aus einem thermoplastischen Harz in einem Lösungsmittel, das aus der Gruppe bestehend aus Wasser, Alkoholen, Estern, Ketonen, Carbonsäuren, Halogenwasserstoffen und Mischungen davon ausgewählt wird, ist.

13. Ein aus aufgeschäumtem Polystyrol geformter Artikel (I) wobei der aus aufgeschäumtem Polystyrol geformte Artikel hergestellt wird durch Expansionsgießen des aufgeschäumten Polystyrolteilchens vorgesehen mit einer Randschicht nach Anspruch 1 durch Dampfheizen; oder
(II) umfassend aufgeschäumte Polystyrolteilchen nach Anspruch 1,
wobei die Randschichten vereinigt sind und daher in der Form von Rippenbarrieren zwischen den Teilchen vorhanden sind,
wobei die Randschichten ferner eine ausgehärtete und modifizierte Substanz, die durch die Reaktion von Methylen-Diphenyl-Diisocyanat mit Feuchtigkeit und dem Bindemittel hergestellt wird, um die Adhäsionskraft zwischen den Teilchen zu verstärken, umfassen.

14. Der aus aufgeschäumtem Polystyrol geformter Artikel umfasst aufgeschäumte Teilchen nach Anspruch 13, wobei jede Randschicht ferner ein Funktionsadditiv umfasst ausgewählt aus der Gruppe bestehend aus Aufgeschäumungsstoffen, keimbildenden Wirkstoffen, Schmierstoffen, Antioxidationsmitteln, thermischen Stabilisatoren, UV-Stabilisatoren, Biostabilisatoren, Füllstoffen, Verstärkungsstoffen, Weichmachern, Farbstoffen, Stoßfestigkeitsstoffen, Flammschutzmitteln, Antistatikmitteln, Vernetzungsmitteln, fluoreszierenden Bleichmitteln, thermisch leitfähigen Stoffen, elektrisch leitfähigen Stoffen, Durchströmungsreglern, magnetischen Stoffen, Tensiden, Stabilisatoren, Hilfsstoffen, Medikamenten, Lösungsmitteln, Härtern, Feuchtigkeitsabsorbern, Verstärkungsstoffen, Aromastoffen, antimikrobiellen Stoffen und Mischungen davon.

15. Der aus aufgeschäumtem Polystyrol geformter Artikel nach Anspruch 14, wobei das Funktionsadditiv ein anorganisches Material ist.

## Revendications

1. Particule de polystyrène expansé dont la surface est dotée d'un film ayant une aptitude au moulage supérieure, dans laquelle le film comprend un liant choisi dans le groupe constitué par un adhésif à base de résine thermoplastique, un adhésif à base de résine thermodurcissable, un adhésif inorganique, un adhésif à base de protéine et un mélange de ceux-ci,
dans laquelle le film comprend en outre du diphényldiisocyanate de méthylène.

2. Particule de polystyrène expansé selon la revendication 1, dans laquelle le diphényldiisocyanate de méthylène est présent en une quantité de 0,1 à 30 % en poids, par rapport au poids de la particule de polystyrène expansé.

3. Particule de polystyrène expansé selon la revendication 1, dans laquelle le liant est un adhésif à base de résine thermoplastique comprenant une résine thermoplastique ayant un point de ramollissement et un point de fusion inférieurs à ceux du polystyrène expansé.

4. Particule de polystyrène expansé selon la revendication 3, dans laquelle le liant est une solution de résine thermoplastique préparée par dissolution d'une résine d'acétate de vinyle dans un solvant constitué par un ou plusieurs composés choisis parmi l'eau, les alcools, les esters, les cétones, les acides carboxyliques, les composés aromatiques et les hydrocarbures halogénés de sorte que la concentration en résine d'acétate de vinyle est ajustée à 3 à 80 % en poids.

5. Particule de polystyrène expansé selon la revendication 1, dans laquelle le film comprend en outre un additif fonctionnel.

6. Particule de polystyrène expansé selon la revendication 5, dans laquelle l'additif fonctionnel est choisi dans le groupe constitué par les agents d'expansion, les agents de nucléation, les lubrifiants, les antioxydants, les stabilisateurs thermiques, les stabilisateurs d'UV, les biostabilisateurs, les charges, les agents de renforcement, les plastifiants, les agents colorants, les agents de résistance aux chocs, les ignifuges, les agents antistatiques, les agents de réticulation, les agents de blanchiment fluorescents, les agents thermiquement conducteurs, les agents électriquement conducteurs, les régulateurs de perméation, les agents magnétiques, les tensioactifs, les stabilisateurs, les excipients, les médicaments, les solvants, les durcisseurs, les absorbants d'humidité, les agents de renforcement, les agents aromatisants, les agents antimicrobiens et des mélanges de ceux-ci.

7. Procédé de préparation d'une particule de polystyrène expansé dont la surface est dotée d'un film ayant une aptitude au moulage supérieure, comprenant :
la préparation d'une composition de revêtement contenant un liant choisi dans le groupe constitué par un adhésif à base de résine thermoplastique, un adhésif à base de résine thermodurcissable, un adhésif inorganique, un adhésif à base de protéine et un mélange de ceux-ci ;
l'application de manière uniforme la composition de revêtement sur la surface des particules de polystyrène expansé ; et
le séchage la composition de revêtement,
dans lequel le film comprend du diphényldiisocyanate de méthylène.

8. Procédé selon la revendication 7, (I) dans lequel le diphényldiisocyanate de méthylène est mélangé avec la composition de revêtement contenant un liant et est ensuite appliqué sur la surface des particules de polystyrène expansé, ou est appliqué séparément avant ou après l'application de la composition de revêtement ; ou
(II) dans lequel le diphényldiisocyanate de méthylène est utilisé en une quantité de 0,1 à 30 % en poids, par rapport au poids de la particule de polystyrène expansé.

9. Procédé selon la revendication 7, dans lequel la composition de revêtement comprend en outre un additif fonctionnel.

10. Procédé selon la revendication 9, dans lequel l'additif fonctionnel est choisi dans le groupe constitué par les agents d'expansion, les agents de nucléation, les lubrifiants, les antioxydants, les stabilisateurs thermiques, les stabilisateurs d'UV, les biostabilisateurs, les charges, les agents de renforcement, les plastifiants, les agents colorants, les agents de résistance aux chocs, les ignifuges, les agents antistatiques, les agents de réticulation, les agents de blanchiment fluorescents, les agents thermiquement conducteurs, les agents électriquement conducteurs, les régulateurs de perméation, les agents magnétiques, les tensioactifs, les stabilisateurs, les excipients, les médicaments, les solvants, les durcisseurs, les absorbants d'humidité, les agents de renforcement, les agents aromatisants, les agents antimicrobiens et des mélanges de ceux-ci.

11. Procédé selon la revendication 7, dans lequel le liant est un adhésif à base de résine thermoplastique comprenant une résine thermoplastique ayant un point de ramollissement et un point de fusion inférieurs à ceux du polystyrène expansé.

12. Procédé selon la revendication 11, dans lequel l'adhésif à base de résine thermoplastique est une solution d'une résine thermoplastique dans un solvant choisi dans le groupe constitué par l'eau, les alcools, les esters, les cétones, les acides carboxyliques, les composés aromatiques, les hydrocarbures halogénés et des mélanges de ceux-ci.

13. Article moulé en polystyrène expansé (I) dans lequel l'article moulé en polystyrène expansé est préparé par moulage par expansion de la particule de polystyrène expansé dotée d'un film selon la revendication 1 par chauffage à la vapeur ; ou
(II) comprenant des particules de polystyrène expansé selon la revendication 1,
dans lequel les films sont fusionnés et sont donc présents sous la forme de barrières nervurées entre les particules,
dans lequel les films comprennent en outre une substance durcie et modifiée produite en faisant réagir le diphényldiisocyanate de méthylène avec de l'humidité et le liant pour renforcer la force adhésive entre les particules.

14. Article moulé en polystyrène expansé comprenant des particules de polystyrène expansé selon la revendication 13, dans lequel chaque film comprend en outre un additif fonctionnel choisi dans le groupe constitué par les agents d'expansion, les agents de nucléation, les lubrifiants, les antioxydants, les stabilisateurs thermiques, les stabilisateurs d'UV, les biostabilisateurs, les charges, les agents de renforcement, les plastifiants, les agents colorants, les agents de résistance aux chocs, les ignifuges, les agents antistatiques, les agents de réticulation, les agents de blanchiment fluorescents, les agents thermiquement conducteurs, les agents électriquement conducteurs, les régulateurs de perméation, les agents magnétiques, les tensioactifs, les stabilisateurs, les excipients, les médicaments, les solvants, les durcisseurs, les absorbants d'humidité, les agents de renforcement, les agents aromatisants, les agents antimicrobiens et des mélanges de ceux-ci.

15. Article moulé en polystyrène expansé selon la revendication 14, dans lequel l'additif fonctionnel est une substance inorganique.
